# EUROPEAN PATENT APPLICATION

(11) **EP 4 807 326 A1**
(43) Date of publication of application: **16.09.2026**
(21) Application number: 25162802.0
(22) Date of filing: 11.03.2025
(51) Int. Cl.: G01C 21/32, B60W 60/00, G01C 21/00, G01S 17/89, G01S 19/39, G05D 1/246, G06V 20/58, G06V 20/56

(54) **NAVIGATION OF AUTONOMOUS VEHICLES**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

In an aspect, a computer system (14) configured to navigate an autonomous vehicle (10) is provided. The processing circuitry (11) is configured to acquire (S101) a map (30) of an area in which the vehicle (10) is to be navigated, the map (30) indicating one or more sub-areas (31, 32) where at least one of a first localization device (15) and a second localization device (16) of the vehicle (10) provides unreliable vehicle location data utilized for locating the vehicle (10) on the map (30), localize (S102) the vehicle (10) by collecting vehicle location data from the first and the second localization device (15, 16), and in response to any one of the first and second localization devices (15, 16) being determined (S103) to provide unreliable vehicle location data: navigate (S105) in a first navigation mode in response to the vehicle (10) being determined (S104) to be located in a sub-area (31, 32) as indicated on the map where it is expected that said any one of the first and second localization devices (15, 16) provides unreliable vehicle location data, and navigate (S106) in a second navigation mode in response to the vehicle (10) being determined (S104) to be located outside of said one or more sub-areas (31, 32) on the map (30) where it is expected that the first and second localization devices (15, 16) provide reliable vehicle location data.

## Description

### TECHNICAL FIELD

The disclosure relates to navigation of autonomous vehicles. In particular aspects, the disclosure relates to determining whether recorded location data is reliable or not. The disclosure can be applied in vehicles such as cars, busses, light-weight trucks, mid-weight trucks, heavy-duty trucks, construction equipment and motorcycles. Although the disclosure may be described with respect to a particular vehicle, the disclosure is not restricted to any particular vehicle.

### BACKGROUND

To be able to localize, and subsequently appropriately navigate, an autonomous vehicle, typically more than one vehicle localization device is used. Since vehicle localization is required in areas where e.g. Global Navigation Satellite Systems (GNSS) are not enabled or accurate enough for the specific application, further localization means are necessary, such as lidar sensors, radar sensors, cameras, etc. These further localization means, e.g. a lidar sensor, may thus be used to initially create a map of the autonomous vehicle surroundings and then, when driving autonomously, use the current lidar input to locate the autonomous vehicle on the pre-recorded map and thereby obtain a current position of the vehicle.

In order to monitor the surroundings of the vehicle to create a map and thereafter localize the vehicle on the map, the lidar sensor requires detectable features, such as road signs, lane markings, buildings, trees, traffic lights, etc., for providing a reference for localization devices to accurately position the vehicle within a pre-recorded map. The lidar localization device can thus match the detected features to corresponding features occurring on the pre-recorded map, where the features of the pre-recorded map are associated with geographical coordinates assigned to the features during the creation of the map. If there is a match between the currently detected features and features occurring on the pre-recorded map, current vehicle coordinates can thus be derived.

However, without such features, for example if the vehicle travels in feature-less landscapes, such as open fields, deserts, or industrial sites with minimal distinguishable structures, the lidar localization device will have problems both to initially create a map (i.e. the map will be "empty") and subsequently to detect features and derive current vehicle coordinates during autonomous driving upon performing the feature matching. For safety reasons, the vehicle may in such scenario have to stop.

### SUMMARY

According to a first aspect of the disclosure, a computer system of a vehicle is provided configured to navigate an autonomous vehicle. The computer system comprises processing circuitry configured to acquire a map of an area in which the vehicle is to be navigated, the map indicating one or more sub-areas where at least one of a first localization device and a second localization device of the vehicle provides unreliable vehicle location data utilized for locating the vehicle on the map, localize the vehicle by collecting vehicle location data from the first and the second localization device, and in response to any one of the first and second localization devices being determined to provide unreliable vehicle location data: navigate in a first navigation mode in response to the vehicle being determined to be located in a sub-area as indicated on the map where it is expected that said any one of the first and second localization devices provides unreliable vehicle location data, and navigate in a second navigation mode in response to the vehicle being determined to be located outside of said one or more sub-areas on the map where it is expected that the first and second localization devices provide reliable vehicle location data.

The first aspect of the disclosure may seek to resolve an issue of how to overcome localization failures in autonomous vehicle navigation is resolved. A technical benefit may include to navigate according to a localization map that identifies sub-areas where localization devices may provide unreliable data.

In an example, the first localization device is selected from a group comprising a radar device, a lidar device, a sonar device, a camera device and a localization device capable of receiving location data from a Global Positioning System (GPS), a Global Navigation Satellite Systems (GNSS), or a group of radio base stations performing triangulation, and the second localization device being another one selected from the group. A technical benefit may be that it ensures robust and redundant localization by utilizing complementary localization technologies, enhancing reliability in diverse environments.

In an example, the first navigation mode comprises navigating through a sub-area as during regular vehicle operation. A technical benefit may be that it allows vehicles to continue operation in expected localization failure zones without unnecessary interruptions, improving efficiency.

In an example, first navigation mode comprises taking a first precautionary navigation action. A technical benefit may be that it enhances safety by enabling the system to take proactive measures when entering areas with known localization issues.

In an example, the first precautionary navigation action includes lowering the speed of the vehicle below a first speed threshold value. A technical benefit may be that it reduces operational risks by slowing down in uncertain localization conditions.

In an example, the second navigation mode comprises taking a second precautionary navigation action, the second precautionary navigation action being stricter than the first precautionary navigation action. A technical benefit may be that it introduces a tiered safety mechanism, allowing the system to adjust navigation actions based on localization reliability levels.

In an example, the second navigation mode includes lowering the speed of the vehicle below a second speed threshold value, which is lower than the first speed threshold value, or stopping the vehicle for safety reasons. A technical benefit may be that it provides a fail-safe approach by either reducing speed significantly or stopping the vehicle to avoid potential hazards when localization fails unexpectedly.

In an example, the second navigation mode includes issuing an alert or requesting human intervention if the vehicle cannot autonomously resolve localization errors. A technical benefit may be that it enables human oversight when autonomous systems cannot reliably determine position, increasing overall system reliability.

In an example, the processing circuitry is further configured to add an indication to the map that one of the two localization devices provides unreliable location data outside of said one or more sub-areas on the map where it is expected that the first and second localization devices provide reliable vehicle location data. A technical benefit may be that it enhances situational awareness by dynamically marking unreliable localization zones, improving future navigation planning.

In an example, the processing circuitry is further being configured to receive information from other vehicles that one of the two localization devices provides unreliable location data outside of said one or more sub-areas on the map where it is expected that the first and second localization devices provide reliable vehicle location data. A technical benefit may be that it enables collaborative mapping, where multiple vehicles contribute to localization reliability, improving fleet-wide accuracy.

In an example, the processing circuitry is further being configured to distribute the map with the added indication to other vehicles. A technical benefit may be that it facilitates real-time knowledge sharing between autonomous vehicles, reducing redundant mapping efforts and improving operational efficiency.

In an example, the first navigation mode further comprises selecting an alternative localization method when any one of the first localization device and the second localization device provides unreliable location data. A technical benefit may be that it ensures continuous navigation by allowing the vehicle to switch to backup localization methods, reducing system downtime.

In an example, the second navigation mode further comprises dynamically computing a vehicle route adjustment to minimize time spent in the sub-areas where the localization devices provide unreliable vehicle location data. A technical benefit may be that it optimizes route planning to avoid or minimize travel through problematic localization areas, enhancing efficiency and reliability.

According to a second aspect of the disclosure, a computer system is provided configured to create a map for facilitating navigation of an autonomous vehicle. The computer system comprises processing circuitry configured to control the vehicle to travel through an area to be represented by the map, collect feature data representing objects in the area and location data representing location of the objects using at least a first localization device and a second localization device of the vehicle while travelling through the area, and in response to either the first localization device or the second localization device being determined to provide unreliable location data: indicate one or more sub-areas on the map where at least one of the first localization device and the second localization device provides unreliable location data.

The second aspect of the disclosure may seek to resolve an issue of how to overcome autonomous vehicle localization uncertainty in mapped environments. A technical benefit may include to create a map enriched with both feature data and localization reliability information, thereby allowing the vehicle to anticipate and adapt to localization challenges in specific sub-areas.

In an example, the location data is determined to be unreliable if the number of detected features of the first localization device falls below a detection threshold value and/or if a received signal strength of the second localization device falls below a signal strength threshold value and/or if recorded location data matches poorly with the created map as determined e.g. by the difference between the recorded location data and a corresponding location on the created map exceeding a set threshold value and/or if GNSS signals from multiple satellites do not match up. A technical benefit may be that it ensures reliable localization by defining clear failure conditions, allowing the system to detect when localization accuracy is compromised and take corrective actions.

In an example, the processing circuitry is further being configured to store the map locally at the vehicle and/or distribute the created map to other vehicles. A technical benefit may be that it enables efficient navigation by allowing individual vehicles to use pre-recorded localization reliability data while also facilitating shared mapping, improving fleet-wide awareness and adaptability in dynamically changing environments.

According to a third aspect of the disclosure, a method of a computer system of navigating an autonomous vehicle is provided. The method comprises acquiring a map of an area in which the vehicle is to be navigated, the map indicating one or more sub-areas where at least one of a first localization and a second localization device of the vehicle provides unreliable vehicle location data utilized for locating the vehicle on the map, localizing the vehicle by collecting vehicle location data from the first and the second localization device, and in response to any one of the first and second localization devices being determined to provide unreliable vehicle location data: navigating in a first navigation mode in response to the vehicle being determined to be located in a sub-area as indicated on the map where it is expected that said any one of the first and second localization devices provides unreliable vehicle location data, and navigating in a second navigation mode in response to the vehicle being determined to be located outside of said one or more sub-areas on the map where it is expected that the first and second localization devices provide reliable vehicle location data.

In some examples, a vehicle is provided comprising the computer system of the first and/or second aspect.

In some examples, a computer program product is provided comprising program code for performing, when executed by the processing circuitry, the method of the third aspect.

In some examples, a non-transitory computer-readable storage medium is provided comprising instructions, which when executed by the processing circuitry, cause the processing circuitry to perform the method of the third aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3 illustrates an area with plentiful of features allowing reliable localization of the vehicle on a map.
FIG. 4 illustrates an area with few features making reliable localization of the vehicle on a map more challenging.
FIG. 5 shows a flowchart illustrating an example of navigating an autonomous vehicle according to the present disclosure.
FIG. 6 illustrates a created map in an example according to the present disclosure.
FIG. 7 shows a flowchart illustrating an example of creating a map according to the present disclosure.
FIG. 8 is a schematic diagram of a computer system for implementing examples disclosed herein.

### DETAILED DESCRIPTION

Aspects set forth below represent the necessary information to enable those skilled in the art to practice the disclosure.

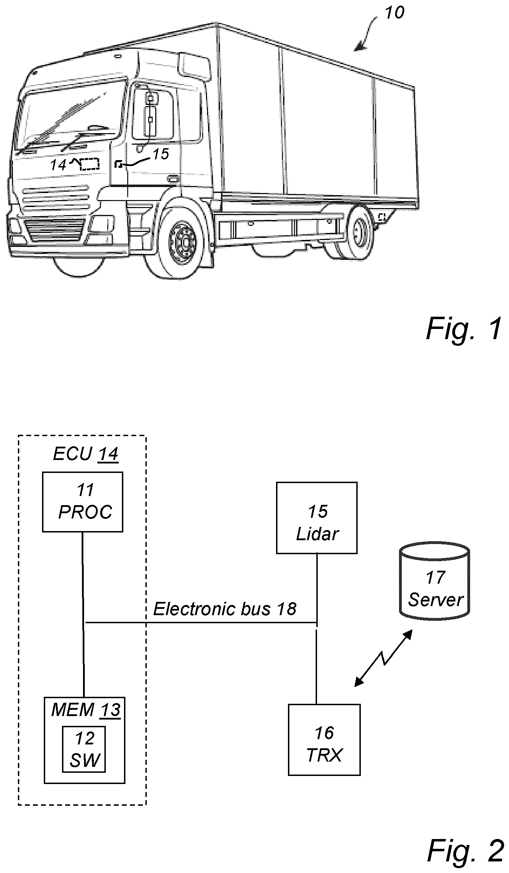

FIG. 1 illustrates a vehicle in the form of a truck 10 in which examples of the present disclosure may be implemented, the truck 10 being equipped with a computer system 14, e.g. in the form of a so-called Electronic Control Unit (ECU) controlling operation of the truck 10. For detecting surrounding vehicles, objects and individuals, the ECU 14 is typically in communicative connection with one or more sensors 15 of the truck 10, such as e.g., radar, lidar, cameras, etc., for monitoring the surroundings of the vehicle and thus to detect surrounding vehicles, objects and individuals. In this example, the surroundings are monitored by a lidar device 15. Although the vehicle 10 in FIG. 1 is depicted as a heavy-duty truck, examples of the present disclosure may be implemented in other types of vehicles, such as in passenger cars, busses, light-duty trucks, mid-duty trucks, construction equipment, motorcycles, marine vessels, etc. As is understood, the vehicle 10 may be capable of partly or full autonomous driving or provided with adaptive cruise control (ACC).

FIG. 2 shows an exemplary system diagram of the computer system 14 with which the truck 10 of FIG. 1 is equipped according to the present disclosure. The computer system 14 will in the following be exemplified by an ECU 14.

The ECU 14 generally comprises processing circuitry (PROC) 11 and a storage medium (MEM) 13 associated with the microprocessor, such as a Random Access Memory (RAM), a Flash memory or a hard disk drive. One or more computer programs (SW) 12 may be stored in the storage medium 13.

The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc.

Further shown in FIG. 2 is the lidar sensor 15 used for object detection. As is well-known, the object detection undertaken by the ECU 14 is performed by collecting data from both the lidar sensor 15 and performing appropriate processing of the collected data.

The ECU 14 is further in communicative connection with a wireless communication device in the form of a wireless transmitter/receiver 16 (commonly referred to as a transceiver, abbreviated "TRX") for providing a wireless interface to the truck 10. As will be described in more detail, the ECU 14 may communicate wirelessly via the transceiver 16 with e.g. a remotely located device 17 for instance providing a GNSS service. The wireless communication of the transceiver 16 may be performed for instance via radio frequency (RF), Bluetooth, a wi-fi provided by a local router, etc. The transceiver 16 is thus capable (possibly in cooperation with the processing circuitry 11) of acquiring location data for the truck 10 by communicating with, and thus receiving data indicating the location from, the remotely located device 17 providing the GNSS service.

Communication between the various devices illustrated in FIG. 2 may occur via an electronic communication bus 18 such as e.g., a Controller Area Network (CAN) bus, a Local Interconnect Network (LIN) bus, an Ethernet bus, etc. Alternatively, wireless communication may occur between the devices.

As previously mentioned, autonomous vehicle navigation relies on accurate localization to determine the position of the truck 10 and to ensure safe operation. Typically, multiple independent localization systems are used to enhance accuracy and redundancy. GNSS is widely used for global positioning, while lidar-based localization enables precise positioning in environments where GNSS signals are unavailable or unreliable. As is understood, while the first localization device 15 is embodied by a lidar sensor, it may be embodied by any one of the devices selected from the group comprising a radar device, a lidar device, a sonar device, a camera device and a localization device capable of receiving location data from a GPS, a GNSS, or a group of radio base stations performing triangulation. Further, while the second localization device 16 is embodied by a GNSS-based localization device, it may be embodied by another one selected from the group. In the following examples, the first localization device 15 is embodied by a lidar device, while the second localization device 16 is embodied by a GNSS device.

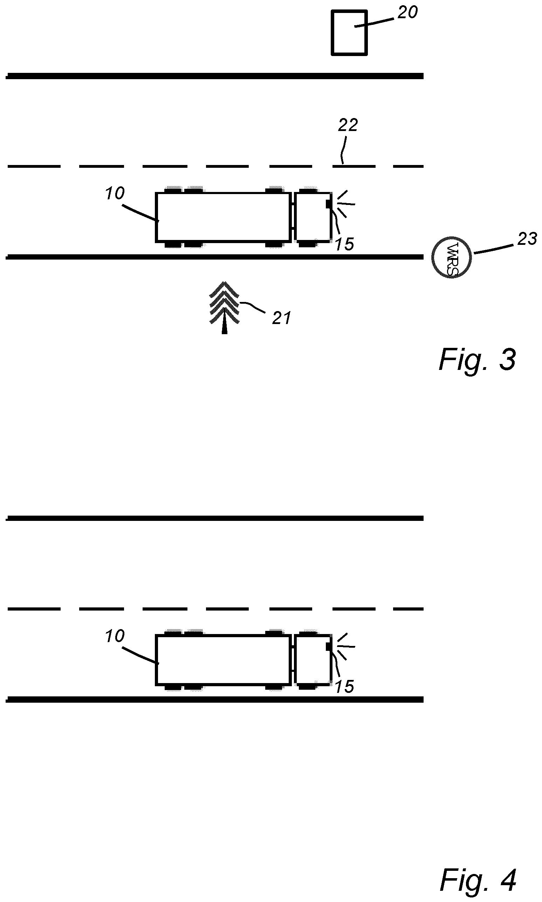

Lidar-based localization involves mapping a site or predefined route by recording lidar data using a lidar device 15 and using this information to localize the truck 10 during autonomous operation. This approach works effectively in structured environments with abundant detectable features, as illustrated in FIG. 3 such as e.g. buildings 20, trees 21, lane markings 22 and road signs 23.

However, in feature-less landscapes (e.g., open fields, deserts, or industrial unloading zones) as illustrated in FIG. 4, lidar-based localization typically struggles due to the absence of reference points.

In safety-critical autonomous systems, losing one localization channel often necessitates stopping the vehicle, as relying on a single input (e.g., GNSS) without verification increases the risk of localization failure and ultimately accidents occurring.

To resolve this issue, a method of navigating an autonomous vehicle is provided which allows for controlled operation in feature-less environments while maintaining safety standards.

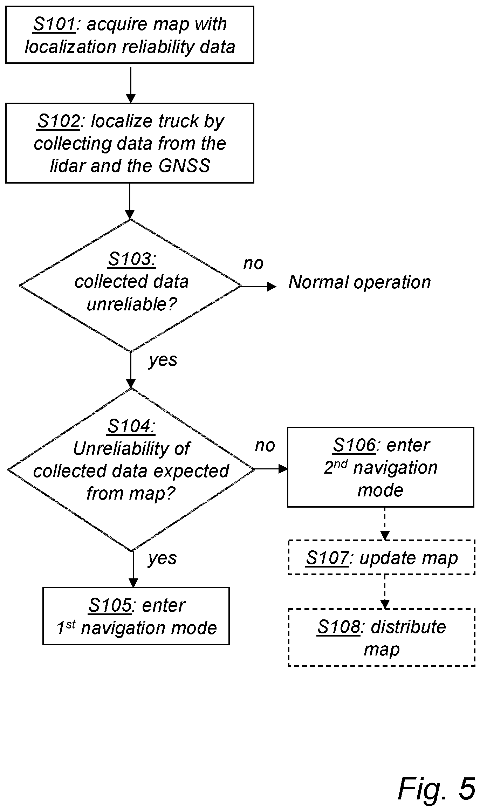

FIG. 5 shows a flowchart illustrating a method of navigating the truck 10 according to an example of the disclosure.

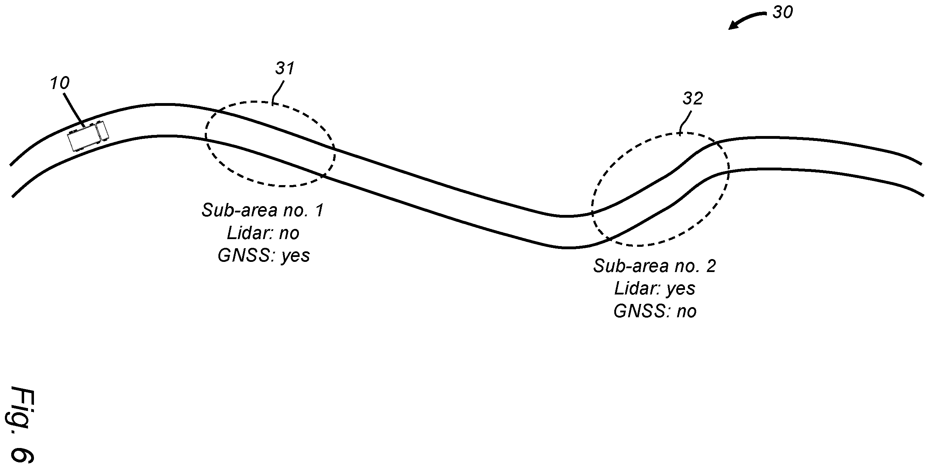

Reference will further be made to FIG. 6 illustrating a map 30 having been created and pre-stored at the truck 10 (or remote from the truck 10) to be used by the ECU 14 for navigating the truck 10 according to an example of the disclosure.

The ECU 14 acquires in S101 the map 30 of the area where the truck 10 is to be navigated. This map is enriched with pre-recorded localization reliability data, identifying sub-areas 31, 32 where at least one of the localization devices 15, 16 is expected to provide unreliable vehicle location data. The map 30 may be stored locally in the memory 13 but may alternatively be stored remotely from the truck 10 and accessed wirelessly. The map 30 may be created for example by having a test vehicle move across an area represented by the map 30 and register sub-areas where either the lidar device 15 or the GNSS-based device 16 provides poor location data which cannot be relied upon.

The first localization device 15 may thus be a local device integrated with the truck 10, such as a lidar device, radar device, sonar device, camera, etc., while the second localization device 16 may be embodied in the form of a device capable of acquiring location data from a remote system such as a GPS, a GNSS, a group of radio base stations utilizing signal triangulation, etc. In the following, the first localization device will be exemplified in the form of a lidar device 15, while the second localization device will be exemplified in the form of a GNSS-based device 16 via which the ECU 14 communicates with the GNSS service provided by the remotely located device 17. The transceiver 16 will in the following be referred to as a GNSS device.

In S102, the ECU 14 collects vehicle location data from the lidar device 15 and the GNSS device 16. The ECU 14 may thus cross-validate both localization sources to determine the position of the truck 10 with high accuracy. If the position computed by both systems aligns within an acceptable threshold, the truck 10 is considered to be localized with sufficient accuracy. In autonomous vehicle systems, it is common practice to use two or more independent localization devices to ensure correct vehicle localization. Each device operates separately and provides its own positional data, which can be cross-verified to improve accuracy. A comparison can then be made between the two positions being provided by the independent devices, and if the positions differ too much, it is considered that an accurate position cannot be determined for the vehicle. This can often lead to that the vehicle has to be stopped, since it can be a safety risk to continue driving with a position that is of low confidence, where only one out of two devices can give the position.

Thereafter in S103, the ECU 14 analyzes localization reliability by checking the quality of data received from the lidar device 15 and the GNSS device 16. If either device 15, 16 fails to provide reliable location data (e.g., due to sensor occlusion, loss of GNSS signal, or a lack of distinguishable features for lidar-based mapping), the ECU 14 verifies against the map 30 whether or not this is an expected behavior of either of the lidar device 15 and the GNSS device 16. As is understood, if both the lidar device 15 and the GNSS device 16 are indicated to provide reliable location data in S103, operation of the truck 10 proceeds as normal.

However, in a scenario where either one, or both, of the lidar device 15 and the GNSS device 16 is indicated to provide unreliable location in S103, the ECU 14 dynamically adapts navigation mode of the truck 10 based on the expected reliability of localization at its current position as indicated by the map 30.

As will be discussed, a first navigation mode may be envisaged where the ECU 14 e.g. lowers the speed of the truck 10 and continues operation in expected localization failure zones. Further, a second navigation mode may be envisaged where stricter fail-safe actions are taken in unexpected localization failure zones. The second navigation mode is thus stricter than the first navigation mode in terms of precautionary actions taken and may e.g. include stopping the truck 10 altogether.

Assuming that the ECU 14 determines in S103 that the location data provided by the lidar device 15 is poor and thus cannot be relied upon, e.g. due to sensor occlusion, or a lack of distinguishable features in the surroundings of the truck 10.

Assuming further that the truck 10 is determined in S104 to be located in first sub-area 31 where the map 30 indicates that the location data provided by the lidar sensor 15 is expected to be unreliable (while the location data provided by the GNSS device 16 is expected to be reliable), a first navigation mode is entered in S105.

In an example, since the location data provided by the lidar sensor 15 indeed is expected to be unreliable as indicated on the pre-stored map 30, the first navigation mode entered in S105 stipulates the ECU 14 controlling the truck 10 to drive through the first sub-area 31 as during regular vehicle operation, i.e. in a "normal" manner since the failure of the lidar device 15 to provide reliable location data is expected to be resolved once the truck 10 exits the first sub-area 31.

However, in an alternative example, the first navigation mode comprises taking a first precautionary navigation action, such as e.g. lowering the speed of truck 10 below a determined first speed threshold value and/or relying only on GNSS navigation.

In an example, it is envisaged that the vehicle speed is lowered below a determined first speed threshold value after a certain time period (which may be set depending on application) has passed or after a certain distance has been travelled (which may be based on based on the size of the sub-area and the planned path through the sub-area). The vehicle speed may be lowered until the truck 10 reaches the end of the first sub-area 31 where both localization devices 15, 16 again are expected to provide reliable localization data.

In another example, the ECU 14 may plan the routing of the truck 10 so that it minimizes the time with only one localization device active. This can be done by avoiding entering a sub-area with degraded localization if it is expected that the vehicle must stop in that sub-area, e.g. due to other traffic. It may be better to maintain the truck 10 in an area with both localization devices 15, 16 providing reliable location data and route the truck 10 through a sub-area with degraded localization with as little time as possible spent with only one localization system working.

In yet an example, the ECU 14 may plan the routing of the truck 10 by reducing the distance in a sub-area with degraded localization as much as possible.

In still a further example, the first navigation mode further comprises the ECU 14 selecting an alternative localization method when any one of the lidar device 15 and the GNSS device 16 provides unreliable location data. For instance, in case the lidar device provides poor (or no) location data, a camera or radar device of the truck 10 may be used.

Assuming instead that the ECU 14 determines in S103 that the location data provided by the GNSS device 16 is poor and thus cannot be relied upon, e.g. due to loss or lack of GNSS signal.

Assuming further that the truck 10 is determined in S104 to be located in second sub-area 32 where the map 30 indicates that the location data provided by the GNSS device 16 is expected to be unreliable (while the location data provided by the lidar device 15 is expected to be reliable), the first navigation mode is entered in S105. Again, it may be determined that normal operation of the vehicle is continued, or that a first precautionary navigation action is taken by lowering the speed of the truck 10.

However, if instead the ECU 14 determines in S103 that the location data provided either by the lidar device 15 or the GNSS device 16 is poor (possibly even non-existing) and thus cannot be relied upon in S103, and further that the truck 10 is determined in S104 to be outside of the first and second sub-areas 31, 32, i.e. in an area of the map 30 where both the lidar device 15 and the GNSS device 16 is expected to provide reliable location data, a second navigation mode is entered in S106.

The second navigation mode may comprise taking a second precautionary navigation action being stricter than the first precautionary navigation action, since an unanticipated fault is indicated to have occurred.

For instance, the truck 10 may reduce its speed to a second threshold value, which is lower than the first speed threshold, or may stop entirely if necessary. Further, an alert may be issued, or human intervention may be requested if the truck 10 cannot autonomously resolve the localization errors.

Thus, the issue of localization failures in autonomous vehicle navigation is resolved, particularly in environments where GNSS signals are unreliable (e.g., tunnels, urban canyons, dense forest roads, etc.) or where lidar-based localization struggles (e.g., due to featureless landscapes, dynamic environments, sensor occlusions, etc.). A technical benefit provided by the disclosure is the dynamic creation of a localization map that identifies sub-areas where localization devices may provide unreliable data. This enables proactive navigation adjustments, allowing vehicles to maintain safe operation by adapting their localization strategy based on pre-recorded and real-time localization reliability data, reducing the risk of localization failures and unnecessary vehicle stops.

In an optional example, as shown in FIG. 5, if the truck 10 (or possibly the truck 10 and multiple other vehicles) experience repeated localization failures in a specific region of the map 30 (i.e. having entered the second navigation mode in S106), the ECU 14 may in S107 dynamically update the map 30, marking these areas as degraded localization zones. Thus, similar to the first and second sub-areas 31, 32 it will be indicated on the map 30 that either of the lidar device 15 or the GNSS device 16 cannot be relied upon in such region. The updated localization map may further in S108 be distributed to other autonomous vehicles operating in the area to improve overall navigation reliability.

As is understood, this may occur in regions with changing environment (e.g. industrial sites where material is transported to the site, or sites where for instance snowfall changes the structure of the site over time). Hence, it might be necessary to not only track areas with reduced localization capability during the mapping phase but also during normal operation. If a region starts to lose one localization device, it can be tracked over time and if numerous vehicles report problems in the same area, it can be assumed that the device indeed has lost the possibility to localize. That area can then be added as an area with reduced localization, meaning that from that point in time, lost localization by one of the devices in that area is accepted without changing the behavior of the vehicle.

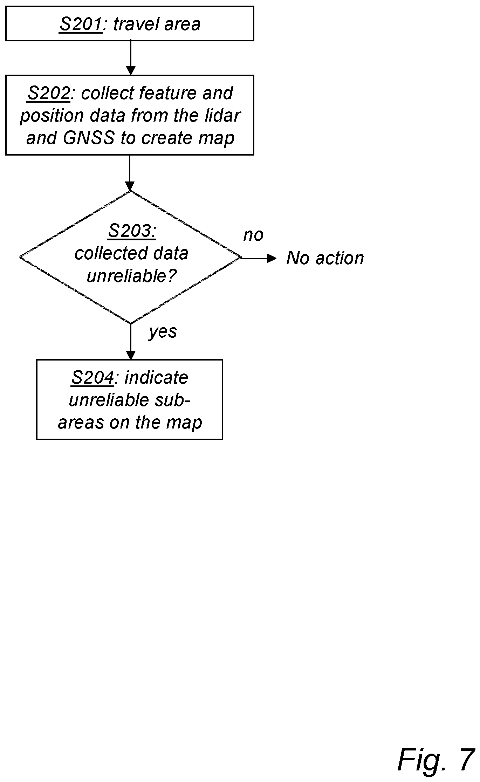

FIG. 7 shows a flowchart illustrating a method of creating the map 30 of FIG. 6 for facilitating navigation of the truck 10 according to an example of the disclosure. To generate the map 30, the ECU 14 controls the truck 10 in S201 to travel through an area that will be represented in the map 30. During this traversal, the lidar device 15 continuously collects S202 location data by scanning the environment and matching detected features (represented by collected feature data) with a pre-recorded or dynamically created reference map. The GNSS device 16 simultaneously provides global position estimates based on satellite signals or other external reference points.

The location data collected in S202 is stored and analyzed to determine the reliability of the different localization methods in various parts of the environment in S203.

As the truck 10 moves, the ECU 14 analyzes in S203 the reliability of the location data provided by each localization device 15, 16. The lidar device 15 may be considered unreliable if e.g. number of detected features falls below a detection threshold value and/or if recorded location data matches poorly with the created map as determined e.g. by the difference between the recorded location data and a corresponding location on the created map exceeding a set threshold value (i.e. the difference should ideally be zero), while the GNSS device 16 may be considered unreliable if for example the GNSS signal strength falls below a predefined signal strength threshold value and/or if GNSS signals from multiple satellites do not match up.

If so, the ECU 14 indicates in S204 one or more sub-areas 31, 32 on the map 30, as previously illustrated with reference to FIG. 6, where at least one of the lidar device 15 and the GNSS device 16 provides unreliable location data.

In an example, the created map 30 is stored locally at the truck 10 in in the memory 11 and/or distributed to other vehicles.

The creating of the map 30 resolves the issue of autonomous vehicle localization uncertainty in mapped environments, particularly when one of the localization devices (such as GNSS or lidar) provides unreliable data due to e.g. signal degradation, lack of environmental features, or external interference. A technical benefit may be that the ECU 14 creates a map enriched with both feature data and localization reliability information, allowing the vehicle to anticipate and adapt to localization challenges in specific sub-areas. This improves navigation accuracy, operational safety, and route planning efficiency by enabling autonomous vehicles to make informed decisions when operating in areas with compromised localization reliability.

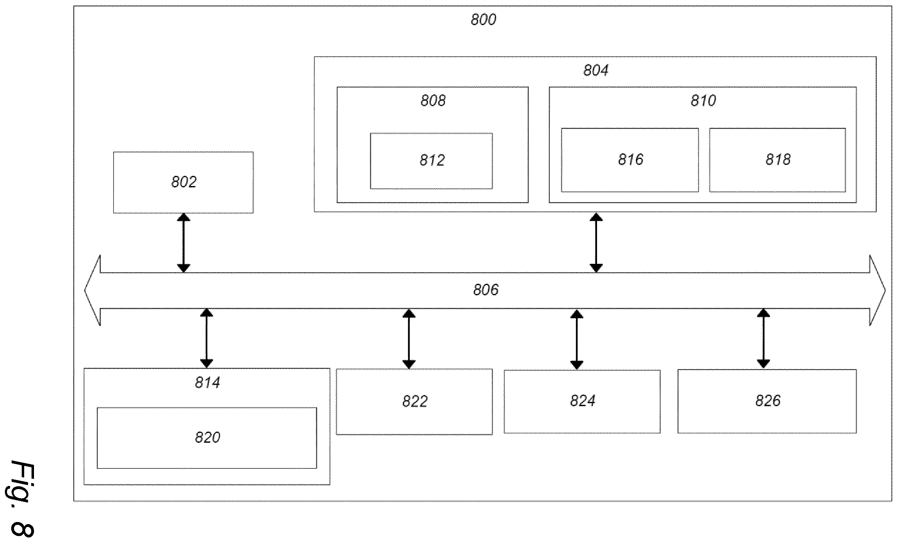

FIG. 8 is a schematic diagram of a computer system 800 for implementing examples disclosed herein. The computer system 800 is adapted to execute instructions from a computer-readable medium to perform these and/or any of the functions or processing described herein. The computer system 800 may be connected (e.g., networked) to other machines in a LAN, an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include a processor device 802 (may also be referred to as a control unit), a memory 804, and a system bus 806. The computer system 800 may include at least one computing device having the processor device 802. The system bus 806 provides an interface for system components including, but not limited to, the memory 804 and the processor device 802. The processor device 802 may include any number of hardware components for conducting data or signal processing or for executing computer code stored in memory 804. The processor device 802 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processor device 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with a processor device 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program product 820 stored on a transitory or non-transitory computer-usable or computer-readable storage medium (e.g., single medium or multiple media), such as the storage device 814, which includes complex programming instructions (e.g., complex computer-readable program code) to cause the processor device 802 to carry out actions described herein. Thus, the computer-readable program code can comprise software instructions for implementing the functionality of the examples described herein when executed by the processor device 802. The processor device 802 may serve as a controller or control system for the computer system 800 that is to implement the functionality described herein.

The computer system 800 also may include an input device interface 822 (e.g., input device interface and/or output device interface). The input device interface 822 may be configured to receive input and selections to be communicated to the computer system 800 when executing instructions, such as from a keyboard, mouse, touch-sensitive surface, etc. Such input devices may be connected to the processor device 802 through the input device interface 822 coupled to the system bus 806 but can be connected through other interfaces such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may also include a communications interface 826 suitable for communicating with a network as appropriate or desired.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.
Example 1. A computer system (14) configured to navigate an autonomous vehicle (10), the computer system comprising processing circuitry (11) configured to: acquire (S101) a map (30) of an area in which the vehicle (10) is to be navigated, the map (30) indicating one or more sub-areas (31, 32) where at least one of a first localization device (15) and a second localization device (16) of the vehicle (10) provides unreliable vehicle location data utilized for locating the vehicle (10) on the map (30); localize (S102) the vehicle (10) by collecting vehicle location data from the first and the second localization device (15, 16), and in response to any one of the first and second localization devices (15, 16) being determined (S103) to provide unreliable vehicle location data: navigate (S105) in a first navigation mode in response to the vehicle (10) being determined (S104) to be located in a sub-area (31, 32) as indicated on the map where it is expected that said any one of the first and second localization devices (15, 16) provides unreliable vehicle location data; and navigate (S106) in a second navigation mode in response to the vehicle (10) being determined (S104) to be located outside of said one or more sub-areas (31, 32) on the map (30) where it is expected that the first and second localization devices (15, 16) provide reliable vehicle location data.
Example 2. The computer system (14) of example 1, the first localization device (15) being selected from a group comprising a radar device, a lidar device, a sonar device, a camera device and a localization device capable of receiving location data from a Global Positioning System (GPS), a Global Navigation Satellite Systems (GNSS), or a group of radio base stations performing triangulation, and the second localization device (16) being another one selected from the group..
Example 3. The computer system (14) of any one of examples 1 or 2, the first navigation mode comprising navigating through the sub-area as during regular vehicle operation.
Example 4. The computer system (14) of any one of examples 1 or 2, the first navigation mode comprising taking a first precautionary navigation action.
Example 5. The computer system (14) of example 4, wherein the first precautionary navigation action includes lowering speed of the vehicle (10) below a first speed threshold value.
Example 6. The computer system (14) of any one of examples 4 or 5, the second navigation mode comprising taking a second precautionary navigation action, the second precautionary navigation action being stricter than the first precautionary navigation action.
Example 7. The computer system (14) of any one of the preceding examples, the second navigation mode including lowering the speed of the vehicle (10) below a second speed threshold value being lower than first speed threshold value, or stopping the vehicle (10) for safety reasons.
Example 8. The computer system (14) of any one of the preceding examples, the second navigation mode including issuing an alert or requesting human intervention if the vehicle (10) cannot autonomously resolve localization errors.
Example 9. The computer system (14) of any one of the preceding examples, the processing circuitry (11) further being configured to: add (S107) an indication to the map (30) that one of the two localization devices (15, 16) provides unreliable location data outside of said one or more sub-areas (31, 32) on the map (30) where it is expected that the first and second localization devices (15, 16) provide reliable vehicle location data.
Example 10. The computer system (14) of example 9, the processing circuitry (11) further being configured to receive information from other vehicles that one of the two localization devices (15, 16) provides unreliable location data outside of said one or more sub-areas (31, 32) on the map (30) where it is expected that the first and second localization devices (15, 16) provide reliable vehicle location data.
Example 11. The computer system (14) of examples 9 or 10, the processing circuitry (11) further being configured to: distribute (S108) the map (30) with the added indication to other vehicles.
Example 12. The computer system (14) of any one of the preceding examples, wherein the first navigation mode further comprises selecting an alternative localization method when any one of the first localization device (15) and the second localization device (16) provides unreliable location data.
Example 13. The computer system (14) of any one of the preceding examples, wherein the second navigation mode further comprises dynamically computing a vehicle route adjustment to minimize time spent in the sub-areas (31, 32) where the localization devices (15, 16) provide unreliable vehicle location data.
Example 14. A computer system (14) configured to create a map (30) for facilitating navigation of an autonomous vehicle (10), the computer system comprising processing circuitry (11) configured to: control (S201) the vehicle (10) to travel through an area to be represented by the map (30); collect (S202) feature data representing objects in the area and location data representing location of the objects using at least a first localization device (15) and a second localization device (16) of the vehicle (10) while travelling through the area; and in response to either the first localization device (15) or the second localization device (16) being determined (S203) to provide unreliable location data: indicate (S204) one or more sub-areas (31, 32) on the map (30) where at least one of the first localization device (15) and the second localization device (16) provides unreliable location data.
Example 15. The computer system (14) of example 14, the location data being determined (S203) to be unreliable if number of detected features of the first localization device (15) falls below a detection threshold value and/or if a received signal strength of the second localization device (16) falls below a signal strength threshold value.
Example 16. The computer system (14) of examples 14 or 15, the processing circuitry (11) further being configured to store the map (30) locally at the vehicle (10) and/or distribute the created map (30) to other vehicles.
Example 17. A vehicle (10) comprising the computer system (14) of any of examples 1-16.
Example 18. A method of a computer system (14) of navigating an autonomous vehicle (10), comprising: acquiring (S101) a map (30) of an area in which the vehicle (10) is to be navigated, the map (30) indicating one or more sub-areas (31, 32) where at least one of a first localization device (15) and a second localization device (16) of the vehicle (10) provides unreliable vehicle location data utilized for locating the vehicle (10) on the map (30); localizing (S102) the vehicle (10) by collecting vehicle location data from the first and the second localization device (15, 16), and in response to any one of the first and second localization devices (15, 16) being determined (S103) to provide unreliable vehicle location data: navigating (S105) in a first navigation mode in response to the vehicle (10) being determined (S104) to be located in a sub-area (31, 32) as indicated on the map where it is expected that said any one of the first and second localization devices (15, 16) provides unreliable vehicle location data; and navigating (S106) in a second navigation mode in response to the vehicle (10) being determined (S104) to be located outside of said one or more sub-areas (31, 32) on the map (30) where it is expected that the first and second localization devices (15, 16) provide reliable vehicle location data.
Example 19. A computer program product comprising program code (13) for performing, when executed by the processing circuitry (11), the method of example 18.
Example 20. A non-transitory computer-readable storage medium (12) comprising instructions (13), which when executed by the processing circuitry (11), cause the processing circuitry (11) to perform the method of example 18.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (14) configured to navigate an autonomous vehicle (10), the computer system comprising processing circuitry (11) configured to:
acquire (S101) a map (30) of an area in which the vehicle (10) is to be navigated, the map (30) indicating one or more sub-areas (31, 32) where at least one of a first localization device (15) and a second localization device (16) of the vehicle (10) provides unreliable vehicle location data utilized for locating the vehicle (10) on the map (30);
localize (S102) the vehicle (10) by collecting vehicle location data from the first and the second localization device (15, 16), and in response to any one of the first and second localization devices (15, 16) being determined (S103) to provide unreliable vehicle location data:
navigate (S105) in a first navigation mode in response to the vehicle (10) being determined (S104) to be located in a sub-area (31, 32) as indicated on the map where it is expected that said any one of the first and second localization devices (15, 16) provides unreliable vehicle location data; and
navigate (S106) in a second navigation mode in response to the vehicle (10) being determined (S104) to be located outside of said one or more sub-areas (31, 32) on the map (30) where it is expected that the first and second localization devices (15, 16) provide reliable vehicle location data.

2. The computer system (14) of claim 1, the first localization device (15) being selected from a group comprising a radar device, a lidar device, a sonar device, a camera device and a localization device capable of receiving location data from 16a Global Positioning System, GPS, a Global Navigation Satellite Systems, GNSS, or a group of radio base stations performing triangulation, and the second localization device (16) being another one selected from the group.

3. The computer system (14) of any one of claims 1 or 2, the first navigation mode comprising navigating through the sub-area as during regular vehicle operation.

4. The computer system (14) of any one of claims 1 or 2, the first navigation mode comprising taking a first precautionary navigation action.

5. The computer system (14) of claim 4, wherein the first precautionary navigation action includes lowering speed of the vehicle (10) below a first speed threshold value.

6. The computer system (14) of any one of claims 4 or 5, the second navigation mode comprising taking a second precautionary navigation action, the second precautionary navigation action being stricter than the first precautionary navigation action.

7. The computer system (14) of any one of the preceding claims, the second navigation mode including lowering the speed of the vehicle (10) below a second speed threshold value being lower than first speed threshold value, or stopping the vehicle (10) for safety reasons.

8. The computer system (14) of any one of the preceding claims, the processing circuitry (11) further being configured to:
add (S107) an indication to the map (30) that one of the two localization devices (15, 16) provides unreliable location data outside of said one or more sub-areas (31, 32) on the map (30) where it is expected that the first and second localization devices (15, 16) provide reliable vehicle location data.

9. The computer system (14) of claim 8, the processing circuitry (11) further being configured to:
distribute (S108) the map (30) with the added indication to other vehicles.

10. A computer system (14) configured to create a map (30) for facilitating navigation of an autonomous vehicle (10), the computer system comprising processing circuitry (11) configured to:
control (S201) the vehicle (10) to travel through an area to be represented by the map (30);
collect (S202) feature data representing objects in the area and location data representing location of the objects using at least a first localization device (15) and a second localization device (16) of the vehicle (10) while travelling through the area; and
in response to either the first localization device (15) or the second localization device (16) being determined (S203) to provide unreliable location data:
indicate (S204) one or more sub-areas (31, 32) on the map (30) where at least one of the first localization device (15) and the second localization device (16) provides unreliable location data.

11. The computer system (14) of claim 10, the location data being determined (S203) to be unreliable if number of detected features of the first localization device (15) falls below a detection threshold value and/or if a received signal strength of the second localization device (16) falls below a signal strength threshold value and/or if recorded location data matches poorly with the created map as determined by a difference between the location data and a corresponding location on the created map exceeding a set threshold value and/or if signals from multiple second localization devices (16) do not match up.

12. A vehicle (10) comprising the computer system (14) of any of claims 1-11.

13. A method of a computer system (14) of navigating an autonomous vehicle (10), comprising:
acquiring (S101) a map (30) of an area in which the vehicle (10) is to be navigated, the map (30) indicating one or more sub-areas (31, 32) where at least one of a first localization device (15) and a second localization device (16) of the vehicle (10) provides unreliable vehicle location data utilized for locating the vehicle (10) on the map (30);
localizing (S102) the vehicle (10) by collecting vehicle location data from the first and the second localization device (15, 16), and in response to any one of the first and second localization devices (15, 16) being determined (S103) to provide unreliable vehicle location data:
navigating (S105) in a first navigation mode in response to the vehicle (10) being determined (S104) to be located in a sub-area (31, 32) as indicated on the map where it is expected that said any one of the first and second localization devices (15, 16) provides unreliable vehicle location data; and
navigating (S106) in a second navigation mode in response to the vehicle (10) being determined (S104) to be located outside of said one or more sub-areas (31, 32) on the map (30) where it is expected that the first and second localization devices (15, 16) provide reliable vehicle location data.

14. A computer program product comprising program code (13) for performing, when executed by the processing circuitry (11), the method of claim 13.

15. A non-transitory computer-readable storage medium (12) comprising instructions (13), which when executed by the processing circuitry (11), cause the processing circuitry (11) to perform the method of claim 13.
